# DEMANDE DE BREVET EUROPEEN

(11) **EP 2 189 582 A2**
(43) Date de publication de la demande: **26.05.2010**
(21) Numéro de dépôt: 09176584.2
(22) Date de dépôt: 20.11.2009
(51) Int. Cl.: E03B 3/02, E03B 3/03

(54) **Dispositif de stockage et de distribution d'eau de pluie comportant une cuve de stockage apte à être enterrée et séparée en une chambre de stockage et une chambre de permutation qui comporte une pompe**

(30) Priorité: 21.11.2008 FR 0806564
(71) Demandeur: EC'Eau Système, 59130 Lambersart (FR)
(72) Inventeur: Sauty, Didier, 59130 Lambersart (FR); Ponchaut, Patrick, 62740 Fouquières Lès Lens (FR)
(74) Mandataire: Bertrand, Didier

(57) **Abrégé**

L'invention concerne un dispositif de stockage d'eau de pluie, apte à permettre la distribution de l'eau de pluie provenant d'un système de collecte d'eau de pluie (11 ; 12 ; 16), ledit dispositif comportant une cuve de stockage (2) qui est apte à être enterrée et qui comporte une chambre de permutation (4) qui communique avec une chambre de stockage (23), de manière à ce que ladite chambre de stockage (23) puisse se vider au moins partiellement dans ladite chambre de permutation (4). Selon l'invention, ladite chambre de permutation (4) présente un volume plus faible que le volume de ladite chambre de stockage (23), une pompe (5) est disposée dans ladite chambre de permutation (4) et comporte une conduite d'aspiration disposée dans ladite chambre de permutation (4) et une conduite de refoulement (53) apte à être connectée audit circuit de distribution d'eau (8).

## Description

La présente invention concerne un dispositif de stockage et de distribution de l'eau de pluie provenant d'un système de collecte des eaux de pluie. Ce dispositif peut éventuellement, selon un mode de réalisation particulier, permettre l'alimentation d'un circuit de distribution d'eau d'une habitation ou autre, soit par l'eau de pluie stockée, soit par l'eau de ville provenant d'un réseau de distribution d'eau potable.

Le document EP 0 633 363 décrit un dispositif de récupération d'eau de pluie qui comporte une cuve alimentée en eau fraîche par une conduite. La cuve comporte une chambre de stockage et une chambre de permutation qui peut être alimentée en eau de ville. La chambre de permutation est située au dessus de la chambre de stockage de manière à assurer la décantation de l'eau de pluie dans la chambre de stockage. La chambre de permutation est ainsi remplie uniquement avec le surnageant de l'eau de pluie, c'est-à-dire le volume d'eau de pluie qui est situé près de la surface libre. Une grande quantité d'eau de pluie reste donc dans la chambre de stockage sans pouvoir être utilisée. Une pompe est située dans une cavité ménagée à un angle inférieur, à l'extérieur de la cuve, sous la chambre de permutation. Cette cuve ne peut donc pas être enterrée pour des raisons d'accès à la pompe. Or, il est connu que l'eau de pluie conserve une meilleure qualité, notamment bactériologique, lorsqu'elle est à l'abri de la lumière et à l'abri des variations de température. Le fait d'enterrer la cuve permet de réunir ces deux conditions.

Le document EP 1 803 856 décrit un dispositif de récupération d'eau de pluie qui comporte une cuve divisée en deux chambres de volumes différents. Une conduite d'eau de ville débouche dans la plus grande des chambres, de manière à pouvoir alimenter cette dernière en eau de ville. L'eau de pluie arrive dans la plus petite des chambres, y est décantée avant de déborder dans la plus grande chambre. L'eau de ville ou de pluie est aspirée par des moyens d'aspiration qui sont reliés à une pompe externe. La cuve peut être enterrée. Les moyens d'aspiration sont montés mobiles verticalement de manière à toujours aspirer la couche surfacique du volume d'eau contenu dans la grande chambre, car la décantation dans la petite chambre n'est pas toujours suffisante. L'installation de ce type de ce dispositif est compliquée car la pompe est externe. Cette dernière, qui doit être installée dans le bâtiment alimenté par la cuve, génère des problèmes d'encombrement et des nuisances sonores. Le transport du dispositif est aussi contraignant car il ne faut pas oublier les différents composants qui sont séparés les uns des autres et risquent, de plus, d'être facilement endommagés.

Un but de la présente invention est de proposer un nouveau dispositif de stockage d'eau de pluie qui comporte une cuve apte à être enterrée et dont l'utilisation ne présente pas tout ou partie des inconvénients précités.

Dans le but de résoudre ce problème, la présente invention propose un dispositif de stockage d'eau de pluie, apte à permettre la distribution de l'eau de pluie provenant d'un système de collecte d'eau de pluie, ledit dispositif comportant une cuve de stockage qui est apte à être enterrée et qui présente une ouverture d'alimentation, apte à être connectée audit système de collecte d'eau de pluie et une ouverture de distribution pour permettre l'alimentation d'un circuit de distribution d'eau, ladite cuve de stockage formant une chambre de stockage et comportant une chambre de permutation qui communique avec ladite chambre de stockage, de manière à ce que ladite chambre de stockage puisse se vider au moins partiellement dans ladite chambre de permutation. Selon l'invention, ladite chambre de permutation présente un volume plus faible que le volume de ladite chambre de stockage, une pompe est disposée dans ladite chambre de permutation et ladite pompe comporte une conduite d'aspiration, disposée dans ladite chambre de permutation et une conduite de refoulement passant à travers ladite ouverture de distribution et apte à être connectée audit circuit de distribution.

La Demanderesse a en effet constaté que lorsque le volume de la chambre de permutation est réduit par rapport à la chambre de stockage, cette dernière permet une décantation de l'eau de pluie suffisante pour le pompage direct de l'eau de pluie qui s'est écoulée, par exemple, par débordement dans la chambre de permutation.

Selon un mode de réalisation, ladite cuve présente un fond sensiblement plat et ladite chambre de permutation est formée par un bac de permutation, disposé sur ledit fond de ladite chambre de stockage. Un bac posé ou fixé sur le fond de la cuve permet de former facilement et à moindre frais, une chambre de permutation de volume réduit, ceci en particulier, dans le cas d'une cuve en béton. On entend, au sens de la présente invention, par le terme de « bac » tout récipient ou réceptacle, disposé dans la cuve ou intégré à la cuve et dont les dimensions (largeur, longueur et hauteur) sont inférieures à celles de la cuve ; le bac peut être formé en une seule pièce avec la cuve ou être une pièce rapportée. Le volume de la cuve entourant le bac, forme alors la chambre de stockage. Le bac peut être, par exemple, en matériau plastique.

Le bac peut comporter un couvercle formant filtre, dans lequel est ménagée une pluralité d'ouvertures permettant le remplissage dudit bac par l'eau de pluie de ladite chambre de stockage. Dans ce cas, c'est l'eau décantée et filtrée qui est pompée, puis envoyée dans le circuit de distribution. Le couvercle peut être un couvercle amovible ou une paroi supérieure formant une seule pièce avec le bac.

Selon un mode de réalisation, le dispositif comporte, en outre, des moyens de détection du niveau d'eau dans ladite cuve, une conduite d'alimentation en eau de pluie qui présente une première extrémité disposée dans ladite chambre de permutation et une seconde extrémité disposée à l'extérieur de ladite cuve et des moyens formant vanne disposés sur ladite conduite d'alimentation en eau de ville, à l'intérieur de ladite cuve, et lesdits moyens formant vanne sont couplés auxdits moyens de détection du niveau d'eau dans ladite cuve de manière à permettre l'alimentation en eau de ville de ladite chambre de permutation, lorsque le niveau d'eau contenue dans ladite cuve est inférieur à une valeur de seuil donnée.

Un tel dispositif permet une permutation automatique eau de pluie-eau de ville sans intervention de l'utilisateur. La pompe et les moyens formant vanne étant dans la cuve, le dispositif est facile à transporter sans risque de dommage pour ces éléments fragiles du dispositif.

Selon un mode de réalisation particulier, les moyens de détection du niveau d'eau dans ladite cuve comportent un flotteur, équipé d'une tige.

Lorsque la chambre de permutation est formée par un bac, le flotteur peut, avantageusement, être disposé dans ladite chambre de permutation et ledit couvercle comporte alors un passage de guidage pour ladite tige.

Avantageusement, la cuve comporte une ouverture de débordement et lesdits moyens formant vanne sont disposés au-dessus de ladite ouverture de débordement. Ceci permet d'éviter toute contamination du réseau d'eau de ville par une remontée d'eau de pluie, comme expliqué ultérieurement.

Selon un mode de réalisation, ladite cuve comporte une portion rétrécie qui définit une ouverture d'accès à ladite cuve et ladite pompe est disposée sensiblement en regard de ladite ouverture d'accès. Une telle implantation de la pompe permet d'y accéder facilement pour sa maintenance. La pompe peut ainsi être facilement retirée de la cuve à travers l'ouverture d'accès.

Avantageusement, ladite cuve comporte une chambre de décantation primaire apte à être alimentée par ledit système de collecte d'eau de pluie et ladite chambre de décantation primaire est hydrauliquement isolée de ladite chambre de permutation et communique avec ladite chambre de stockage pour permettre le passage de l'eau de pluie ayant décantée dans ladite chambre de décantation primaire, vers ladite chambre de stockage.

D'autres particularités et avantages de l'invention ressortiront à la lecture de la description, faite ci-après, de deux modes de réalisation particuliers de l'invention, donnés à titre indicatif mais non limitatif, en référence aux dessins annexés sur lesquels :
- la Figure 1 représente une vue schématique en coupe, d'une installation comportant un mode de réalisation particulier du dispositif de l'invention ; et
- la Figure 2 représente une vue en perspective d'un mode de réalisation particulier de la chambre de permutation.

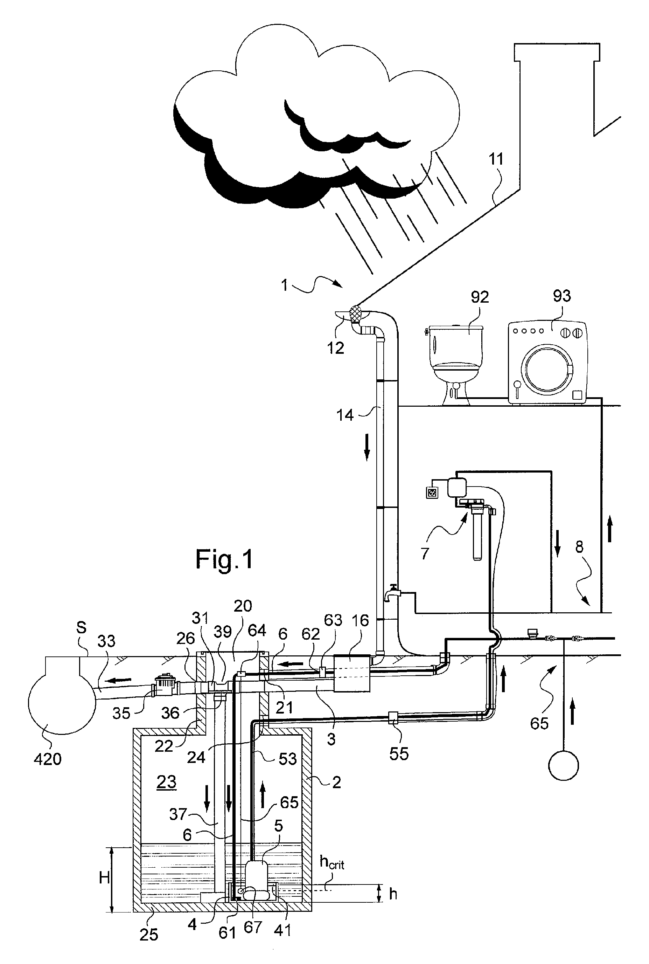

En référence à la Figure 1, l'installation comporte une habitation 1 qui présente un toit 11, équipé d'un système de collecte des eaux de pluie. Ce système de collecte comporte une gouttière 12, qui reçoit les eaux de ruissellement provenant du toit 11, et un conduit d'évacuation 14, vertical, qui relie la gouttière 12 à un boîtier de collecte 16, extérieur à l'habitation 1.

A l'extérieur de l'habitation 1, se trouve une cuve de stockage 2. Cette cuve 2 peut être, par exemple, une cuve en béton. Une cuve en plastique ou autre peut également être utilisée selon la présente invention. La cuve de stockage 2 est enterrée, sous le sol S, et présente une ouverture d'accès 20, disposée sensiblement au niveau du sol S. L'ouverture d'accès 20 est fermée par une plaque de protection et permet l'accès à l'intérieur de la cuve de stockage 2. Cette ouverture d'accès 20 permet également la mise à l'air de l'intérieur de la cuve 2. La cuve 2 présente, également, un fond 25, sensiblement plan, horizontal, et opposé à l'ouverture d'accès 20.

Sur la Figure 1, la cuve 2 présente une portion rétrécie 22, encore appelée « rehausse » par l'Homme du Métier. Cette portion rétrécie 22 est ouverte au niveau de l'ouverture d'accès 20 et débouche, à l'opposée de cette dernière, dans une chambre de stockage 23, de plus grande section et qui constitue la majeure partie du volume interne de la cuve de stockage 2. La portion rétrécie 22 présente une ouverture d'alimentation 21, ménagée dans sa paroi latérale, en-dessous de l'ouverture d'accès 20. Une ouverture de distribution 24 est également ménagée dans la paroi latérale de la portion rétrécie 22, en dessous de l'ouverture d'alimentation 21, sensiblement à proximité de la chambre de stockage 23. L'ouverture d'alimentation 21 et l'ouverture de distribution 24 sont ménagées d'un même côté de l'ouverture d'accès 20. La portion rétrécie 22 présente également une ouverture de débordement 26, ou trop-plein, qui est disposée sensiblement en regard de l'ouverture d'alimentation 21. L'ouverture de débordement 26 est disposée légèrement en dessous de l'ouverture d'alimentation 21 de manière à former un passage incliné qui permet de donner une inclinaison à une conduite passant à travers les deux ouvertures précitées. Cette inclinaison facilite l'écoulement de l'eau vers l'ouverture de débordement 26 et vers la cuve de stockage 2, comme expliqué ultérieurement.

Dans le mode de réalisation ici représenté, la portion rétrécie 22 ou rehausse forme une seule et même pièce avec la cuve de stockage 2. II est également possible, dans le cadre de la présente invention, d'utiliser une cuve, par exemple, en béton, qui correspond à la chambre de stockage 23 et de surmonter l'ouverture de cette cuve par un élément complémentaire, par exemple, en matière plastique, qui est fixé sur la cuve et forme la rehausse . La rehausse est fixée sur la cuve, à proprement dit, et peut former l'ouverture d'accès 20 et comporter l'ouverture d'alimentation 21, l'ouverture de distribution 24 et l'ouverture de débordement 26.

Comme représenté sur la Figure 1, une conduite d'alimentation 3 relie l'intérieur de la cuve 2 au boîtier de collecte 16. La conduite d'alimentation 3 est connectée à une de ses extrémités au boîtier de collecte 16. L'autre extrémité de la conduite d'alimentation 3 est connectée à un élément de raccordement 31. Cet élément de raccordement 31 est creux et présente une forme de T. II est disposé dans la portion rétrécie 22 de la cuve de stockage 2. L'élément de raccordement 31 comporte une branche horizontale, montée entre l'ouverture d'alimentation 21 et l'ouverture de débordement 26. Cette branche horizontale comporte une ouverture de trop plein 39, disposée en regard de l'ouverture d'accès 20, sur la paroi supérieure de la branche horizontale. La branche horizontale de l'élément de raccordement 31 est connectée à la conduite d'alimentation 3, précitée, et traverse la portion rétrécie 22, sensiblement parallèlement au plan de l'ouverture d'accès 20. L'élément de raccordement 31 présente également une branche verticale qui descend vers la chambre de stockage 23 de la cuve de stockage 2. Comme représenté sur la Figure 1, la branche horizontale de l'élément de raccordement 31 est connectée au réseau d'assainissement 420, par l'intermédiaire d'une conduite 33, dite de « trop plein », qui comporte un clapet anti-retour 35. Ce clapet anti retour 35 permet d'éviter l'intrusion des nuisibles dans la cuve, ainsi que toute remontée des eaux usées du réseau d'assainissement 420. La conduite d'alimentation 3, l'élément de raccordement 31 et la conduite de trop plein 33 sont disposés de manière à former une pente, d'au moins 1 %, par exemple, qui descend du boîtier de collecte 16 vers le réseau d'assainissement 420. Cette pente permet d'amener correctement l'eau de pluie collectée dans le boîtier de collecte 16 vers, d'une part la cuve de stockage 2 et d'autre part, le réseau d'assainissement 420.

L'élément de raccordement 31 comporte un pré-filtre 36, qui peut, par exemple, être une grille, par exemple, de maille 1 mm, inclinée vers le clapet anti-retour 35 et disposée dans la branche horizontale de l'élément de raccordement 31, au-dessus de l'ouverture au niveau de laquelle, la branche verticale débouche dans la branche horizontale. Ce filtre 36 permet d'éliminer les impuretés les plus grossières, comme par exemple, les feuilles ou brindilles, emportées par les eaux de pluies ruisselant du toit 11. Lorsque des feuilles ou autres obstruent le filtre 36, les eaux de ruissèlement, provenant du toit 11, ne peuvent plus pénétrer dans la cuve 2. Elles ruissellent donc fortement à travers la branche horizontale de l'élément de raccordement 31, vers le réseau d'assainissement 420, emportant les feuilles ou autres qui obstruaient le pré-filtre 36. Le pré-filtre 36 est ainsi nettoyé et les eaux de pluie peuvent à nouveau entrer dans la cuve de stockage 2.

La branche verticale de l'élément de raccordement 31 est connectée à une conduite d'amenée 37, sensiblement verticale, qui comporte une portion coudée, disposée sensiblement sur le fond 25 de la chambre de stockage 2, à côté du bac de permutation 4. La portion coudée présente une portion d'extrémité sensiblement horizontale, qui débouche dans la cuve de stockage 2 et s'étend parallèlement au fond 25 de cette dernière. Cette portion d'extrémité coudée permet d'alimenter la cuve de stockage 2, sans turbulence, ni remous, qui risquerait de mettre en suspension les éventuelles particules déposées par décantation sur le fond 25 de la chambre de stockage 23 (arrivée calme).

Le bac de permutation 4 précité est disposé sur le fond 25. Dans le cas présent, le bac de permutation est en matière plastique mais cette caractéristique n'est pas limitative de la présente invention. Le bac de permutation 4 présente une paroi de fond qui est parallèle au fond 25 de la cuve 2 et disposée sur ce dernier. Le bac de permutation 4 peut être lesté et/ou fixé sur le fond 25 de la cuve de stockage 2, au moyen de vis, par exemple, qui traversent sa paroi de fond. Le bac de permutation 4 présente une face supérieure, opposée à sa paroi de fond, qui est ouverte. Cette face ouverte est munie d'un couvercle 41 dans lequel est ménagée une pluralité de trous ou ouvertures qui permettent à l'eau de pluie de la cuve de stockage 23 d'être filtrée avant de pénétrer dans le bac de permutation 4. Le couvercle 41 qui ferme le bac 4, permet d'utiliser un bac de permutation 4, en matière plastique, peu coûteux et qui présente une faible rigidité. Le couvercle 41 permet de rigidifier le bac de permutation 4 dont les parois latérales sont soumises à la pression de l'eau de pluie contenue dans la cuve de stockage 2. Le bac de permutation 4 garde ainsi sa forme et permet un bon pompage de l'eau qu'il contient. Un bac ouvert au niveau de sa face supérieure et sans couvercle peut également être utilisé. De même, le couvercle amovible 41 peut être remplacé par un bac qui comporte une paroi supérieure munie d'une pluralité d'ouvertures et formant filtre.

Dans le mode de réalisation particulier, ici représenté, le bac de permutation 4 présente une hauteur h, de l'ordre d'une vingtaine de centimètres pour un volume de l'ordre d'une quarantaine de litres. Ces dimensions ne sont pas limitatives de l'invention. A titre indicatif, la hauteur de la cuve 2, au niveau de la chambre de stockage 23 est de l'ordre de 2 m.

En général, plus la chambre de permutation présente un petit volume par rapport à la chambre de stockage, plus on évite le gaspillage de l'eau de ville et plus on favorise la décantation dans la chambre de stockage. La chambre de stockage peut, par exemple, représenter de l'ordre de 0,3% à 1,5% du volume total de la cuve 2.

Comme représenté sur la Figure 1, une pompe 5 est disposée dans le bac de permutation 4. La pompe comporte une conduite d'aspiration qui est disposée dans le bac de permutation 4, afin que la pompe 5 puisse pomper l'eau contenue dans ce dernier. Dans certains cas, la conduite d'aspiration est interne à la pompe et seul l'orifice d'entrée de la conduite d'aspiration est visible au niveau de la pompe 5. Le couvercle 41 présente un passage qui permet à la pompe 5, trop encombrante pour être entièrement contenue dans le bac de permutation 4, de dépasser au-dessus de ce dernier. La sortie de la pompe 5 est connectée à une conduite de refoulement 53. Cette conduite de refoulement 53, comporte une portion sensiblement verticale, qui traverse la chambre de stockage 23 de la cuve 2 et la rehausse 22, et une portion horizontale, extérieure à la cuve et souterraine, qui est insérée à travers l'ouverture de distribution 24. La conduite de refoulement 53 comporte, au niveau de son extrémité libre, extérieure à la cuve 2, des moyens de raccordement 55 qui la raccorde à une station de filtration 7, disposée dans l'habitation 1.

La station de filtration 7 peut être, par exemple, située dans le sous-sol de l'habitation ou le garage de cette dernière. La station de filtration 7 est raccordée à un circuit de distribution d'eau de pluie 8 qui comporte une pluralité de conduites permettant d'alimenter, par exemple, un robinet d'arrosage 91, situé à l'extérieur de l'habitation 1, le réservoir de toilettes 92 et un lave-linge 93.

Comme représenté sur la Figure 1, la cuve de stockage 2 comporte également une conduite d'alimentation en eau de ville 6. Cette conduite d'alimentation en eau de ville 6 comporte une première extrémité 61, disposée dans le bac de permutation 4. Cette première extrémité 61 débouche sensiblement parallèlement au fond du bac de permutation 4, afin d'alimenter ce dernier, sans création de remous ou turbulences, qui risqueraient de perturber l'alimentation de la pompe 5 (arrivée calme). La conduite d'alimentation en eau de ville 6 présente une seconde extrémité 62, équipée de moyens de raccordement 63 (moyens de raccordement rapide, par exemple), situés à l'extérieur de la cuve de stockage 2. Les moyens de raccordement 63 permettent de connecter la conduite d'alimentation en eau de ville 6, au réseau de distribution d'eau de ville 65 (eau potable), situé dans l'habitation 1. Ceci permet de respecter la disconnexion type AB suivant la norme NFEN 1717.

Sur la Figure 1, les moyens de raccordement 63 sont extérieurs à l'habitation. Les moyens de raccordement 63 peuvent également être adaptés pour être disposés dans l'habitation 1, à proximité, par exemple, de la conduite d'alimentation principale du réseau de distribution d'eau de ville 65, afin de simplifier l'installation du dispositif de l'invention.

La conduite d'alimentation en eau de ville 6 est équipée de moyens formant vanne 64, disposés dans la cuve 2, plus particulièrement dans la portion rétrécie 22, au-dessus de l'élément de raccordement 31. Ces moyens formant vanne 64 sont couplés à des moyens de détection qui détectent le niveau d'eau dans le bac de permutation 4.

Les moyens formant vanne 64 peuvent, par exemple, être du type comportant un élément formant clapet qui est monté mobile entre une position de fermeture, dans laquelle il obture la section de la conduite d'alimentation en eau de ville 6, et une position d'ouverture, dans laquelle il permet le passage de l'eau de ville provenant du réseau de distribution 65, précité, à travers la conduite d'alimentation en eau de ville 6. Cet élément formant clapet peut, par exemple, et comme représenté sur la Figure 1, être mis en mouvement par l'intermédiaire d'une tige rigide 65. Une extrémité de la tige 65 est reliée à l'élément formant clapet tandis que l'autre extrémité de la tige est munie d'un flotteur 67 qui est disposé dans le bac de permutation 4 et fait office de moyen de détection du niveau d'eau contenue dans le bac de permutation 4. Un tel dispositif permet de coupler, facilement et de manière purement mécanique, des moyens formant vanne, purement mécaniques, avec des moyens de détection qui sont également purement mécaniques. Cet ensemble est très robuste et ne nécessite aucune alimentation en courant électrique, ce qui est préférable au vu de la présence d'eau dans la cuve, et facilite encore l'installation du dispositif de l'invention. La tige 65 traverse le couvercle 41 du bac de permutation 4, au niveau d'un orifice de section restreinte qui permet de guider la tige 65 et de la maintenir verticale dans la cuve 2. Le couvercle 41 fait donc également office de moyen de maintien et de guidage de la tige 65, ce qui permet une détection fiable et aisée du niveau d'eau dans le bac de permutation 4. Le couvercle 41 fait office de filtre et procure également une solidité et une robustesse augmentées aux moyens de détection du niveau, en évitant que la tige 65 ne s'écarte de la verticale et ne se détache ainsi des moyens formant vanne 64.

D'autres moyens formant vanne, tels que, par exemple, une électrovanne, peuvent également être utilisés. II est également possible d'utiliser une sonde pour détecter le niveau d'eau dans la cuve 2.

Le fonctionnement de l'installation va maintenant être décrit en référence à la Figure 1.

L'eau de pluie ruisselant sur le toit 11 est collectée par la gouttière 12 puis recueillie dans le boîtier de collecte 16. L'eau de pluie traverse la conduite d'alimentation 3 et l'élément de raccordement 31 dans lequel elle est pré-filtrée par le filtre 36. L'eau de pluie pénètre ensuite dans la chambre de stockage 23, à travers le filtre 36, la branche verticale de l'élément de raccordement 31 et la conduite d'amenée 37.L'eau de pluie décante dans la chambre de stockage 23. autour de la chambre de permutation. Lorsque le niveau H d'eau de pluie dans la chambre de stockage 23 est supérieur à la hauteur h des parois latérales du bac de permutation 4, le bac de permutation 4 se remplit, par débordement, d'eau de pluie. Le surnageant de l'eau de pluie décantée dans la chambre de stockage déborde dans le bac de permutation 4 et est filtré à travers le couvercle 41. Tant que le niveau d'eau de pluie dans la cuve est supérieur à h, le bac de permutation 4 se remplit par débordement avec la fraction de surface de l'eau de pluie décantée et contenue dans la chambre de stockage 23. La pompe 5 pompe, dans le bac de permutation 4, de l'eau de pluie, qu'elle envoie, via la conduite de refoulement 53, vers la station de filtration 7 et le circuit de distribution 8. L'habitation 1 est ainsi alimentée en eau de pluie par le circuit de distribution 8.

Lorsque le niveau d'eau de pluie baisse, faute de précipitation, et atteint la valeur h, la pompe 5 commence à vider le bac de permutation 4 puisque celui-ci n'est plus alimenté par la chambre de stockage 23. Les moyens formant vanne 64 sont conçus pour que, lorsque le flotteur 67 se trouve à une distance critique h_{crit}, inférieure à h, au-dessus du fond du bac de permutation 4, la tige 65, de part sa longueur déterminée, fait passer l'élément formant clapet, de sa position de fermeture, à sa position d'ouverture. L'eau de ville du réseau de distribution d'eau de ville 65, pénètre alors dans le bac de permutation 4, par la conduite d'alimentation en eau de ville 6, et se mélange à l'eau de pluie encore contenue dans le bac de permutation 4. Le volume mélangé est restreint du fait de la contenance limitée du bac de permutation 4. L'eau de ville n'est donc pas gaspillée. Lorsque le niveau d'eau dans le bac de permutation atteint à nouveau la valeur h, les moyens formant vanne 64 coupent l'alimentation en eau de ville du bac de permutation 4. La tige 65 qui est reliée au flotteur 67, remonte, en effet, vers l'ouverture d'accès 20 et fait passer l'élément formant clapet, de sa position d'ouverture, à sa position de fermeture. La pompe 5 continue toujours de pomper le mélange contenu dans le bac de permutation 4. Tant que la cuve de stockage 2 n'est pas suffisamment alimentée en eau de pluie, le bac de permutation 4 est alimenté en eau de ville et la pompe 5 envoie donc, dans un premier temps, de l'eau de ville mélangée à de l'eau de pluie, puis de l'eau de ville, pure, dans le circuit de distribution 8.

La permutation eau de pluie-eau de ville s'effectue automatiquement, sans coupure de la pompe 5, sans risque de désamorçage de cette dernière, et sans action de la part de l'utilisateur. L'eau de ville est consommée en petites quantités, ce qui permet de réduire le gaspillage, en attendant les prochaines pluies. En effet, dès que la cuve de stockage 2 est alimentée en eau de pluie et que le niveau d'eau de pluie H dépasse la hauteur h, dans la chambre de stockage 23, le bac de permutation 4 est à nouveau rempli d'eau de pluie. La quantité d'eau de ville, consommée entre le moment où le niveau d'eau de pluie dans la chambre de stockage est inférieur à h, et celui où le niveau est supérieur à h, est donc réduite à son minimum. De même la permutation de l'alimentation du circuit de distribution 8, dans le sens eau de ville-eau de pluie, se fait également de manière automatique, sans intervention de la part de l'utilisateur, sans coupure de la pompe 5, ni risque de désamorçage de cette dernière.

Les risques de contamination du réseau d'eau de ville 65 sont également évités, notamment au sens de la Norme NFEN 1717. En effet, même lorsque le niveau d'eau dans la cuve de stockage 2 est maximal, il reste, du fait de la présence de l'ouverture de trop plein 39, de la conduite de trop plein 33 et de l'ouverture de débordement 26, toujours inférieur à la position de l'ouverture de débordement 26. Les moyens formant vanne 64 étant disposés au-dessus de la conduite d'alimentation 3 (qui est, elle-même, disposée plus haut que l'ouverture de débordement 26), il reste toujours une portion de conduite 6 qui est vide, en aval des moyens formant vanne 64. Cette portion vide (remplie d'air) permet d'éviter tout contact, entre l'eau de pluie de la cuve 2 et l'eau de ville qui provient du réseau 65 et qui est contenue dans la portion de la conduite d'alimentation en eau de ville 6, située en amont des moyens formant vanne 64. Par ailleurs, en cas de situation extrême, dans laquelle la cuve 2 déborderait par l'ouverture d'accès 21 et l'eau de pluie de la cuve 2 remonterait dans la conduite d'alimentation 3, l'air contenu dans la conduite d'alimentation en eau de ville 6, en aval des moyens formant vanne 64, serait comprimé mais permettrait néanmoins, de par sa simple présence, la protection du réseau d'eau de ville 65, en assurant un tampon entre l'eau de pluie contenue dans la conduite 6, en aval des moyens formant vanne 64, et l'eau de ville contenue dans la conduite 6, en amont des moyens formant vanne 64.

L'installation du dispositif de l'invention est très aisée. En effet, la cuve de stockage 2, contenant :
- la pompe 5 et sa conduite de refoulement 53 équipée des moyens de raccordement 55 qui dépassent hors de la cuve 2, à travers l'ouverture de distribution 24 ;
- l'élément de raccordement 31, monté transversalement dans la portion réduite 22 ; et
- la conduite d'alimentation en eau de ville 6 qui est équipée des moyens formant vanne 64, disposés dans la portion réduite 22 de la cuve 2, et des moyens de raccordement 63, disposés à l'extérieur de la cuve 2, peut être facilement installée, en raccordant simplement l'élément de raccordement 31 à la conduite 3, la conduite d'alimentation en eau de ville 6, au réseau de distribution d'eau de ville 65 et la conduite de refoulement 53 au circuit de distribution 8. La pompe 5 et les moyens formant vanne 64 restent à l'abri dans la cuve 2, ce qui permet d'installer, dans un premier temps, la cuve de stockage 2, puis de la raccorder, dans un second temps, sans crainte de détérioration du dispositif de l'invention entre les deux opérations.

II est également possible d'utiliser des moyens de détection du niveau d'eau dans la chambre de stockage 23. Dans ce cas, on peut, par exemple, déclencher l'arrivée d'eau de ville après un laps de temps donné (qui dépend des caractéristiques des la pompe 5), écoulé après le moment où le niveau détecté dans la chambre de stockage 23 est égal à h.

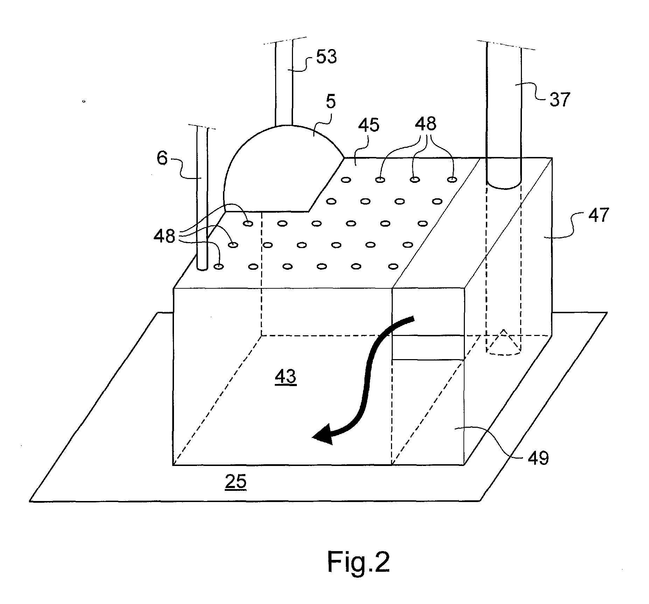

La Figure 2 représente un mode de réalisation particulier d'une chambre de permutation qui intègre une chambre de décantation primaire. Cette chambre de permutation est formée par un bac 4 comme précité, monté sur le fond plan 25 de la cuve 2. Le bac 4 est divisé en deux compartiments, l'un, le plus grand des deux, fait office de chambre de permutation 43. II est alimenté par une conduite d'alimentation en eau de ville 6 munie de moyens formant vanne non représentés. Le petit compartiment 47 sert de chambre de décantation primaire. La conduite d'amenée de l'eau de pluie 37 débouche dans le compartiment 47, au niveau du fond de ce dernier afin d'éviter les remous. La chambre de décantation primaire 47 est isolée de la chambre de permutation 43 et l'eau de pluie contenue dans la chambre de décantation primaire 47 ne peut pas pénétrer dans la chambre de permutation 43. Le bac 4 est fermé par une paroi supérieure 45 qui recouvre les deux compartiments 47 et 43. Au niveau de la chambre de permutation 43, la paroi supérieure 45 comporte une pluralité d'ouvertures 48 qui forment une paroi filtrante. La chambre de décantation primaire 47 comporte une paroi verticale avant 49 qui ménage une ouverture sous la paroi supérieure 45. La paroi avant 49 s'étend à partir du fond du bac 4 mais ne rejoint pas la paroi supérieure 45.

Le fonctionnement de ce second mode de réalisation va maintenant être décrit en référence à la Figure 2. Le fonctionnement est le même que celui décrit en référence à la Figure 1. L'eau de pluie arrive par la conduite d'amenée d'eau de pluie 37 dont l'embouchure débouche dans la chambre de décantation primaire 47, située dans le bac de permutation 4. L'eau de pluie décante ainsi une première fois dans la chambre de décantation primaire 47 puis s'écoule par débordement (voir la flèche) au-dessus de la paroi avant 49 dans la chambre de stockage 23. L'eau décante alors une seconde fois dans la chambre de stockage 23. Par débordement, le surnageant de l'eau de pluie décantée et stagnant dans la chambre de stockage 23 passe ensuite dans la chambre de permutation 43 du bac 4 à travers les ouvertures 48 de la paroi supérieure 45 qui sont ménagées au niveau de la chambre de permutation 43. La chambre de décantation primaire 47 est isolée de la chambre de permutation de manière à ce que l'eau décantée une première fois dans la chambre de décantation primaire 47 s'écoule dans la chambre de stockage 23 pour y être décantée une seconde fois.

Dans ce second mode de réalisation, une chambre de permutation sans paroi supérieure ou couvercle filtrant peut aussi être utilisée. La hauteur de la paroi verticale avant 49 est ajustée en fonction du débit d'eau de pluie arrivant par la conduite d'amenée 37.

Dans le second mode de réalisation, la chambre de permutation et la chambre de décantation primaire sont ménagées dans un même bac pour simplifier l'installation mais deux bacs séparés et éventuellement disjoints peuvent être utilisés.

Selon un mode de réalisation non représenté, la chambre de permutation comporte une surface filtrante, qui peut être par exemple, ménagée dans sa paroi latérale. Cette surface filtrante permet le passage de l'eau décantée dans la chambre de stockage vers la chambre de permutation. Dans ce cas, la surface filtrante sera disposée suffisamment haut sur la chambre de permutation de manière à faire entrer une fraction décantée dans la chambre de permutation.

## Revendications

1. Dispositif de stockage d'eau de pluie et apte à permettre la distribution de l'eau de pluie provenant d'un système de collecte d'eau de pluie (11 ; 12 ; 16), ledit dispositif comportant une cuve de stockage (2) qui est apte à être enterrée et qui présente une ouverture d'alimentation (21),apte à être connectée audit système de collecte d'eau de pluie (11 ; 12 ; 16) et une ouverture de distribution (24) pour permettre l'alimentation d'un circuit de distribution d'eau (8), ladite cuve de stockage (2) formant une chambre de stockage (23) et comportant une chambre de permutation (4) qui communique avec ladite chambre de stockage (23), de manière à ce que ladite chambre de stockage (23) puisse se vider au moins partiellement dans ladite chambre de permutation (4), **caractérisé en ce que** ladite chambre de permutation (4) présente un volume plus faible que le volume de ladite chambre de stockage (23), **en ce qu'**une pompe (5) est disposée dans ladite chambre de permutation, **en ce que** ladite pompe comporte une conduite d'aspiration disposée dans ladite chambre de permutation et une conduite de refoulement passant à travers ladite ouverture de distribution et apte à être connectée circuit de distribution (8).

2. Dispositif selon la revendication 1, **caractérisé en ce que** ladite cuve (2) présente un fond sensiblement plat (25), et **en ce que** ladite chambre de permutation (4) est formée par un bac de permutation (4), disposé sur ledit fond de ladite chambre de stockage (23).

3. Dispositif de stockage selon la revendication 2, **caractérisé en ce que** ledit bac (4) comporte un couvercle (41) formant filtre, dans lequel est ménagée une pluralité d'ouvertures permettant le remplissage dudit bac (4) par l'eau de pluie de ladite chambre de stockage (2).

4. Dispositif selon l'une quelconque des revendications précédentes, **caractérisé en ce qu'**il comporte, en outre, des moyens de détection (67) du niveau d'eau dans ladite cuve (4), une conduite d'alimentation en eau de pluie (6) qui présente une première extrémité disposée dans ladite chambre de permutation (4) et une seconde extrémité disposée à l'extérieur de ladite cuve (2) et des moyens formant vanne (64) qui sont disposés sur ladite conduite d'alimentation en eau de ville (6) et dans ladite cuve (2) et **en ce que** lesdits moyens formant vanne (64) sont couplés auxdits moyens de détection du niveau d'eau dans ladite cuve de manière à permettre l'alimentation en eau de ville de ladite chambre de permutation (4), lorsque le niveau d'eau contenue dans ladite cuve (4) est inférieur à une valeur de seuil (h_{crit}) donnée.

5. Dispositif selon la revendication 4, **caractérisé en ce que** lesdits moyens de détection du niveau d'eau dans ladite chambre de permutation comportent un flotteur (67) équipé d'une tige (65).

6. Dispositif selon la revendication 5 et l'une quelconque des revendications 3 et 4, **caractérisé en ce que** ledit flotteur (67) est disposé dans ladite chambre de permutation (4) et **en ce que** ledit couvercle (41) comporte un passage de guidage pour ladite tige (65).

7. Dispositif selon l'une quelconque des revendications 4 à 6, **caractérisé en ce que** ladite cuve (2) comporte une ouverture de débordement (26) et **en ce que** lesdits moyens formant vanne (64) sont disposés au-dessus de ladite ouverture de débordement (26).

8. Dispositif selon l'une quelconque des revendications précédentes, **caractérisé en ce que** ladite cuve (2) comporte une portion rétrécie (22) qui définit une ouverture d'accès (20) à ladite cuve et **en ce que** ladite pompe (5) est disposée sensiblement en regard de ladite ouverture d'accès (20).

9. Dispositif selon l'une quelconque des revendications précédentes, **caractérisé en ce que** ladite cuve (2) comporte une chambre de décantation primaire (47), apte à être alimentée par ledit système de collecte d'eau de pluie (11, 12, 16), et **en ce que** ladite chambre de décantation primaire (47) est hydrauliquement isolée de ladite chambre de permutation (43) et communique avec ladite chambre de stockage (23) pour permettre le passage de l'eau de pluie ayant décantée dans ladite chambre de décantation primaire (47), vers ladite chambre de stockage (23).
